# EUROPEAN PATENT APPLICATION

(11) **EP 4 091 902 A1**
(43) Date of publication of application: **23.11.2022**
(21) Application number: 21741073.7
(22) Date of filing: 08.01.2021
(51) Int. Cl.: B61F 5/10, B61F 5/22, F16K 1/00, F16K 1/32

(54) **HEIGHT ADJUSTMENT DEVICE**

(30) Priority: 15.01.2020 JP 2020004427
(71) Applicant: Hitachi Astemo, Ltd., Hitachinaka-shi, Ibaraki 312-8503 (JP)
(72) Inventor: OKAZAKI, Kengo, Hitachinaka-shi, Ibaraki 312-8503 (JP); EGAWA, Hiroshi, Hitachinaka-shi, Ibaraki 312-8503 (JP); TAKAHASHI, Kazuki, Hitachinaka-shi, Ibaraki 312-8503 (JP)
(74) Representative: Hoffmann Eitle
(86) International application number: PCT/JP2021/000459
(87) International publication number: WO 2021/145277

(57) **Abstract**

A guide portion separated off from a valve body (a first flow rate control portion) is placed in sliding contact with a case, and therefore the valve body is prevented from receiving a force in a gouging direction that is applied to a valve rod. As a result, an extremely low flow rate characteristic does not change even when the guide portion is unevenly worn by receiving the force on the valve rod in the gouging direction, and a change in the extremely low flow rate characteristic of a leveling valve can be prevented over a long period of time.

## Description

### TECHNICAL FIELD

The present invention relates to an automatic leveling apparatus for a railway train.

### BACKGROUND ART

There are known leveling valves for railway trains (hereinafter referred to as "leveling valves") provided in a passage of fluid between a fluid source (a compressor) and a fluid actuation apparatus (an air spring) and configured to adjust the height of a vehicle body relative to a bogie. According to a leveling valve (a valve apparatus) disclosed in PTL 1, air is supplied to or exhausted from a fluid actuation apparatus when an intake valve rod or an exhaust valve rod moves forward/rearward according to a relative displacement of a vehicle body to a bogie. This leveling valve is categorized into the LV4 type having a dead zone and a time lag in the JRIS standards (the Japan Association of Rolling Stock Industries Standards). On the other hand, leveling valves categorized into the LV7 type have an extremely low flow rate zone around the neutral position of an actuation arm.

### CITATION LIST

### PATENT LITERATURE

PTL 1: Japanese Patent Application Public Disclosure No. 2012-31932

### SUMMARY OF INVENTION

### TECHNICAL PROBLEM

In the LV4-type and LV7-type leveling valves, a force is applied to the valve rod in a gouging direction due to contact of the rotating actuation arm and the horizontally moving valve rod. If a flow rate control portion is unevenly worn, an extremely low flow rate characteristic (an orifice characteristic) changes especially in the LV7-type leveling valves.

One of objects of the present invention is to provide a leveling apparatus capable of preventing a change in an extremely low flow rate characteristic over a long period of time.

### SOLUTION TO PROBLEM

According to one aspect of the present invention, a leveling apparatus is provided in a passage of fluid between a fluid source and a fluid actuation apparatus and configured to adjust a height of a vehicle body relative to a bogie. The leveling apparatus includes an actuation arm configured to move pivotally according to a relative displacement of the vehicle body to the bogie, a case including a flow passage establishing communication between the fluid source or the atmosphere and the fluid actuation apparatus, a valve rod having a distal end protruding from one end side of the case into abutment with the actuation arm and configured to move relative to the case according to the pivotal movement of the actuation arm, a valve portion contained in the case and configured to open the flow passage due to the movement of the valve rod, a first flow rate control portion provided between the valve portion and the valve rod and configured to control a flow rate in the flow passage according to a movement position of the valve rod, and a guide portion provided to the valve rod. The guide portion is disposed at a position different from the first flow rate control portion in a movement direction of the valve rod and placed in sliding contact with an inside of the case.

### ADVANTAGEOUS EFFECTS OF INVENTION

According to the one aspect of the present invention, the guide portion is disposed at the position different from the first fluid control portion, and therefore a change in the extremely low flow rate characteristic of the leveling apparatus can be prevented over a long period of time.

### BRIEF DESCRIPTION OF DRAWINGS

Fig. 1 illustrates a first embodiment, and illustrates a general concept of a system including a leveling valve.
Fig. 2 illustrates the first embodiment, and is a front view of the leveling valve with a part thereof cross-sectionally illustrated.
Fig. 3 illustrates the first embodiment, and is a cross-sectional view of an intake valve when the valve is closed.
Fig. 4 illustrates the first embodiment, and is a cross-sectional view of the intake valve at the time of an extremely low flow rate characteristic.
Fig. 5 illustrates the first embodiment, and is a cross-sectional view of the intake valve when the valve is opened.
Fig. 6 is a front view of a guide portion used in the first embodiment.
Fig. 7 illustrates the first embodiment, and is a cross-sectional view of an exhaust valve when the valve is closed.
Fig. 8 illustrates another embodiment of the guide portion.
Fig. 9 illustrates another embodiment of the guide portion.
Fig. 10 illustrates another embodiment of the guide portion.
Fig. 11 illustrates a second embodiment, and is a cross-sectional view of an intake valve when the valve is closed.
Fig. 12 illustrates the second embodiment, and is a cross-sectional view of the intake valve at the time of the extremely low flow rate characteristic.
Fig. 13 illustrates the second embodiment, and is a cross-sectional view of the intake valve when the valve is opened.

### DESCRIPTION OF EMBODIMENTS

(First Embodiment) A first embodiment of the present invention will be described with reference to the accompanying drawings.

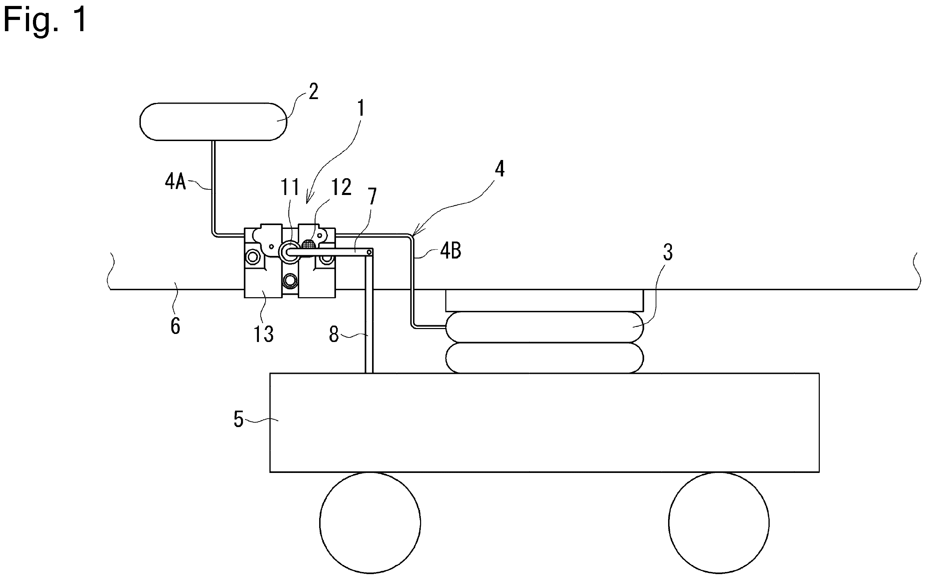

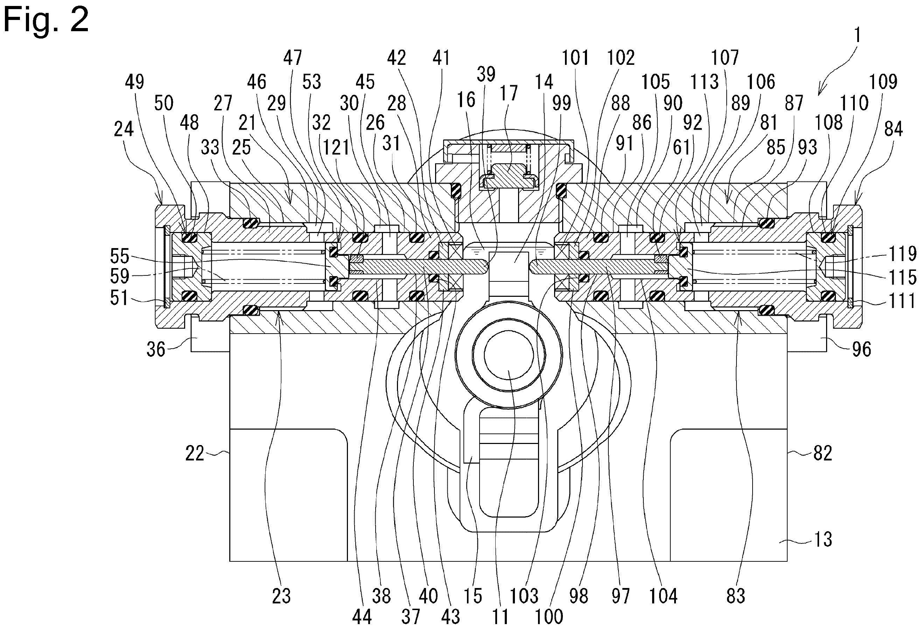

The vertical direction in Figs. 1 and 2 will be referred to as a vertical direction of the present leveling valve 1 (a leveling apparatus) for convenience.

As illustrated in Fig. 1, the leveling valve 1 is a so-called leveling valve for a railway train provided in a passage 4 of air (fluid) between a compressor 2 (a fluid source) and an air spring 3 (a fluid actuation apparatus), and configured to automatically adjust the height of a vehicle body 6 relative to a bogie (flatcar) 5. The leveling valve 1 includes a driven shaft 11 located at the center of a housing 13 and coupled with the bogie 5 via a horizontal lever 7 and a linkage rod 8.

Referring to Figs. 1 and 2, in the leveling valve 1, when the vehicle height changes, i.e., the air spring 3 compresses or extends to cause the vehicle body 6 to be displaced relative to the bogie 5, this displacement is converted into a rotational motion of the driven shaft 11. At this time, when the vehicle height is lowered, i.e., the air spring 3 compresses, the horizontal lever 7 moves pivotally about the driven shaft 11 from a neutral position (refer to Fig. 1) in the counterclockwise direction in Fig. 1. Due to that, the driven shaft 11 rotates in the counterclockwise direction in Fig, 1 in conjunction with the horizontal lever 7. As a result, an intake valve 21 is opened to establish communication through the passage 4 between the compressor 2 and the air spring 3.

When the intake valve 21 is opened to establish the communication through the passage 4, compressed air is supplied from the compressor 2 to the air spring 3 and the air spring 3 extends as a result thereof. When the air spring 3 extends, the horizontal lever 7 moves pivotally about the driven shaft 11 in the clockwise direction in Fig. 1, and the driven shaft 11 rotates in the clockwise direction in Fig. 1 in conjunction with the horizontal lever 7. When the vehicle height reaches a reference height, i.e., the horizontal lever 7 returns to the neutral position (refer to Fig. 1), the intake valve 21 is closed to block the communication through the passage 4.

On the other hand, when the vehicle height is raised, i.e., the air spring 3 extends, the horizontal lever 7 moves pivotally about the driven shaft 11 from the neutral position (refer to Fig. 1) in the clockwise direction in Fig. 1. Due to that, the driven shaft 11 rotates in the clockwise direction in Fig, 1 in conjunction with the horizontal lever 7. As a result, an exhaust valve 81 is opened to establish communication between the air spring 3 and an exhaust port 12 (refer to 1).

When the exhaust valve 81 is opened to establish the communication between the air spring 3 and the exhaust port 12, the air stored in the air spring 3 is exhausted into the atmosphere and the air spring 3 compresses. When the air spring 3 compresses, the horizontal lever 7 moves pivotally about the driven shaft 11 in the counterclockwise direction in Fig. 1, and the driven shaft 11 rotates in the counterclockwise direction in Fig. 1 in conjunction with the horizontal lever 7. When the vehicle height reaches the reference height, i.e., the horizontal lever 7 returns to the neutral position (refer to Fig. 1), the exhaust valve 81 is closed to block the communication between the air spring 3 and the exhaust port 12 (the atmosphere).

In this manner, when the horizontal lever 7 moves pivotally about the driven shaft 11 according to the relative displacement of the vehicle body 6 to the bogie 5, the driven shaft 11 rotates in the clockwise direction or the counterclockwise direction in conjunction with the horizontal lever 7. The leveling valve 1 selectively brings the air spring 3 into communication with the compressor 2 (the fluid source) or the exhaust port 12 (the atmosphere) according to the rotational direction of the driven shaft 11 (the pivotal movement direction of the horizontal lever 7). As a result, the relative displacement of the vehicle body 6 to the bogie 5 is automatically adjusted, and the vehicle height is kept at the reference height.

As illustrated in Fig. 2, the driven shaft 11 is provided rotatably about an axis in the housing 13 fixed to the vehicle body 6. The driven shaft 11 is disposed along the width direction of the vehicle body 6 (perpendicularly to the horizontal lever 7). An actuation arm 14 and a torsion spring 15 are provided at one end portion of the driven shaft 11 (the end portion thereof on the outer side of the vehicle body 6). When the actuation arm 14 moves pivotally about the axis of the driven shaft 11 to an intake side (the "counterclockwise direction" in Fig. 2) or an exhaust side (the "clockwise direction" in Fig. 2), the torsion spring 15 generates a biasing force (a spring force) for returning the actuation arm 14 to a neutral position (refer to Fig. 2). A check valve 17 is provided at the center of the upper portion of the housing 13.

The intake valve 21 and the exhaust valve 81 are provided on one side (the "left side" in Fig. 2) and the opposite side (the "right side" in Fig. 2) in the upper portion of the housing 13, respectively. The intake valve 21 includes a case 24 attached in a case hole 23 provided on a one-side surface 22 of the housing 13. The case hole 23 includes a large-diameter hole portion 25 and a small-diameter hole portion 26. The large-diameter hole portion 25 is opened to the one-side surface 22 of the housing 13. The small-diameter hole portion 26 is opened to an oil chamber 16 at the center of the housing 13. A small-diameter shaft portion 28 of the case 24 is fitted in the small-diameter hole portion 26 of the case hole 23. On the other hand, a large-diameter shaft portion 27 of the case 24 is fixed in the large-diameter hole portion 25 of the case hole 23.

An annular flow passage 29 is provided between the proximal portion (the left end portion) of the small-diameter shaft portion 28 of the case 24 and the large-diameter hole portion 25 of the case hole 23. Further, an annular flow passage 30 is provided between the small-diameter shaft portion 28 of the case 24 and the small-diameter hole portion 26 of the case hole 23. The annular flow passage 30 is formed by an annular groove formed on the small-diameter hole portion 26. The annular flow passage 30 is sealed by a seal ring 31 and a seal ring 32 provided on the small-diameter shaft portion 28 of the case 24. On the other hand, the annular flow passage 29 is sealed by the seal ring 32 and a seal ring 33. The seal ring 33 is compressed between the case hole 23 and the case 24. The case 24 is fixed to the housing 13 using a nut 36.

A valve rod 37 is provided in a hollow portion of the case 24. The valve rod 37 is coaxial with the case hole 23 and the case 24. An axially (horizontally) intermediate portion of the valve rod 37 is slidably fitted in a first hole portion 38 of the case 24. A recessed portion 40 is provided on the end surface of the case 24 on the inner side (the "right side" in Fig. 2). The end of the first hole portion 38 on the inner side is opened to the bottom portion of the recessed portion 40. A washer 41 and a nut 42 are provided in the recessed portion 40. The first hole portion 38 of the case 24 is sealed to the oil chamber 16 by a seal ring 43 provided in an annular groove of the bottom surface of the recessed portion 40.

The valve rod 37 is inserted through the washer 41 and the nut 42, and an end portion 39 (the distal end) thereof on the inner side (the "right side" in Fig. 2) protrudes from the end surface (one end side) of the case 24 on the inner side to the oil chamber 16. The spherical surface of the end portion 39 on the inner side is in abutment with the actuation arm 14 and the valve rod 37 axially moves in conjunction with the pivotal movement of the actuation arm 14. A second hole portion 44 is provided in the hollow portion of the case 24. The end of the first hole portion 38 on the outer side (the "left side" in Fig. 2) is opened to the bottom portion of the second hole portion 44. The second hole portion 44 is in communication with the annular flow passage 30 via a plurality of passages 45 ("two passages" illustrated in Fig. 2) provided on the small-diameter shaft portion 28 of the case 24.

A third hole portion 46 is provided in the hollow portion of the case 24. The end of the second hole portion 44 on the outer side (the "left side" in Fig. 2) is opened to the third hole portion 46. The third hole portion 46 is in communication with the annular flow passage 29 via a plurality of passages 47 ("two passages" illustrated in Fig. 2) provided on the small-diameter shaft portion 28 of the case 24. The hole diameter of the hollow portion of the case 24 increases in the order of the first hole portion 38, the second hole portion 44, and the third hole portion 46.

A stepped recessed portion 48 is provided on the end surface of the case 24 on the outer side (the "left side" in Fig. 2). The end of the third hole portion 46 on the outer side is opened to the bottom portion of the stepped recessed portion 48. An intake-side port portion 49 is mounted in the stepped recessed portion 48. The third hole portion 46 is sealed to the atmosphere by a seal ring 50 provided on the intake-side port portion 49. The intake-side port portion 49 is prevented from being detached off from the case 24 by a stop ring 51 attached on the step portion of the stepped recessed portion 48. One end side of a passage 4A (refer to Fig. 1) is connected to the compressor 2 (the fluid source), and the opposite end side of the passage 4A is connected to the intake-side port portion 49. Further, the intake-side port portion 49 is in communication with the annular flow passage 29 via a passage (not illustrated) provided to the housing 13.

A valve portion 53 is provided in the intake valve 21. The valve portion 53 establishes or blocks the communication between the compressor 2 (the fluid source) and the air spring 3 (the fluid actuation apparatus) according to a movement of the valve rod 37. The valve portion 53 includes an annular seat portion 54 and a valve body 55 (a first flow rate control portion). The annular seat portion 54 is provided on the circumferential edge of the opening of the second hole portion 44 on the outer side (the "left side" in Fig. 2). The valve body 55 is in abutment with the seat portion 54 separably therefrom. The seat portion 54 has a protrusion shape protruding to the outer side with respect to the bottom surface of the third hole portion 46.

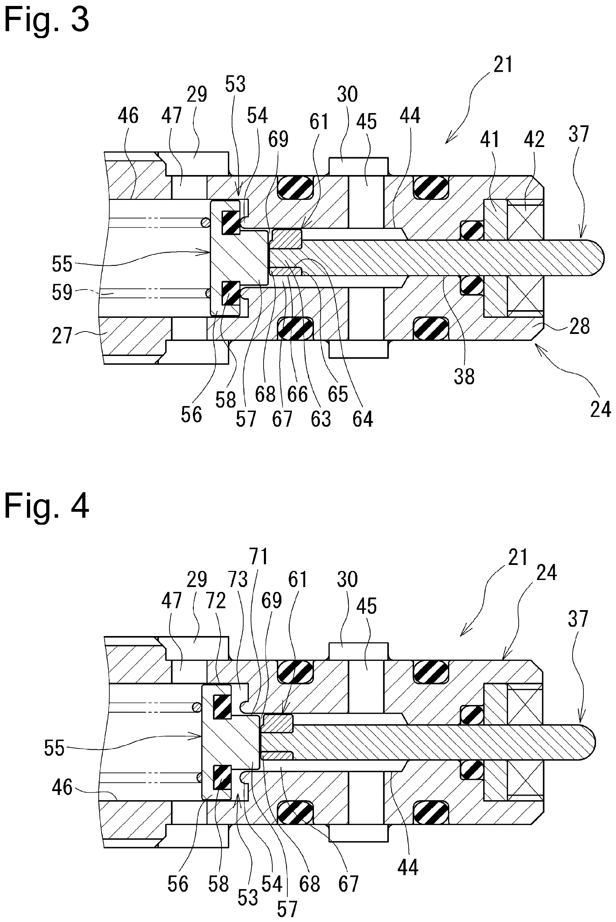

The valve body 55 is a component separated off from the valve rod 37, and is formed into a stepped columnar shape including a large-diameter portion 56 and a small-diameter portion 57. The large-diameter portion 56 and the small-diameter portion 57 of the valve body 55 are inserted in the third hole portion 46 of the case 24 and the second hole portion 44 of the case 24, respectively. An annular seated portion 58 is embedded between the large-diameter portion 56 and the small-diameter portion 57. The seated portion 58 faces the seat portion 54. The valve body 55 is biased in a valve-closing direction (the "rightward direction in Fig. 2) by a valve spring 59 provided between the valve body 55 and the intake-side port portion 49. For example, an elastic member is used as the seated portion 58. Further, an annular extremely small flow passage 71 (refer to Fig. 4) is formed between the small-diameter portion 57 and the second hole portion 44 with the small-diameter portion 57 of the valve body 55 inserted in the second hole portion 44.

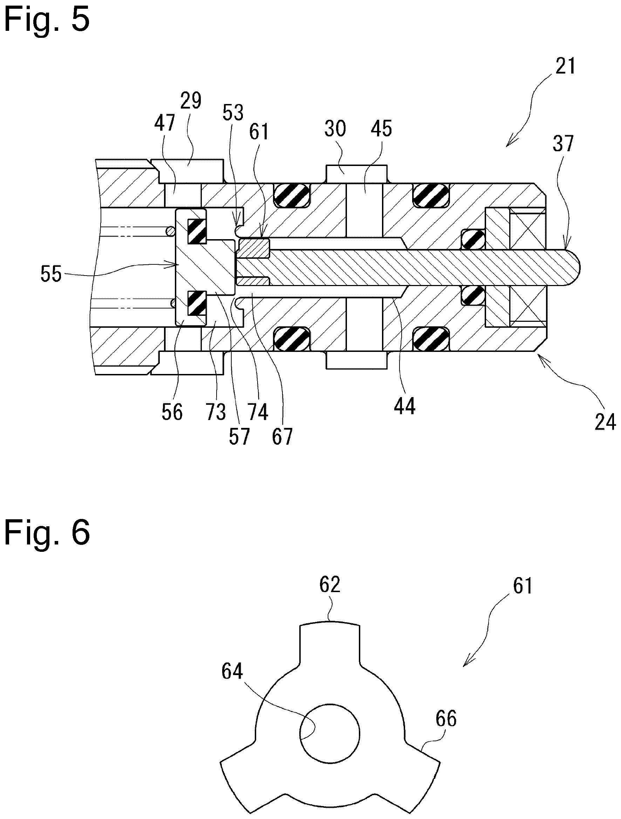

Referring to Figs. 3 and 6, the intake valve 21 includes a guide portion 61 provided at the end portion (the proximal end) of the valve rod 37 on the outer side (the "left side" in Fig. 3). The guide portion 61 is formed into a sleeve-like shape, and an outer peripheral surface 62 thereof (refer to Fig. 6) is guided by the second hole portion 44 of the case 24 in the axial direction (the "horizontal direction" in Fig. 3). In other words, the guide portion 61 is inserted in the second hole portion 44 of the case 24. A shaft hole 64 is formed through the guide portion 61. A small-diameter shaft portion 63 formed at the end portion of the valve rod 37 on the outer side is press-fitted in the shaft hole 64. The guide portion 61 is axially positioned relative to the valve rod 37 due to abutment of the end surface thereof on the inner side (the "right side" in Fig. 3) against a stepped portion 65 of the valve rod 37.

A plurality of ("three" in the first embodiment) grooves 66 (refer to Fig. 6) is provided on the outer peripheral surface 62 of the guide portion 61. The grooves 66 are arranged at circumferential equal intervals. The grooves 66 extend on the guide portion 61 in the axial direction (the "horizontal direction" in Fig. 3). Due to that, a plurality of flow passages 67 is formed between the case 24 and the guide portion 61. The flow passages 67 establish communication between the annular flow passage 29 and the annular flow passage 30. A boss portion 68 coaxial with the guide portion 61 is formed on the end surface of the guide portion 61 on the outer side (the "left side" in Fig. 3). The end surface of the boss portion 68 is in abutment with the end surface of the small-diameter portion 57 of the valve body 55. Due to that, an annular flow passage 69 is formed around the outer periphery of the boss portion 68. The flow passage 69 is in communication with the flow passages 67.

On the other hand, the exhaust valve 81 includes a case 84 attached to a case hole 83 provided on an opposite-side surface 82 of the housing 13. The case hole 83 includes a large-diameter hole portion 85 and a small-diameter hole portion 86. The large-diameter hole portion 85 is opened to the opposite-side surface 82 of the housing 13. The small-diameter hole portion 86 is opened to the oil chamber 16 at the center of the housing 13. A small-diameter shaft portion 88 of the case 84 is fitted in the small-diameter hole portion 86 of the case hole 83. On the other hand, a large-diameter shaft portion 87 of the case 84 is fixed in the large-diameter hole portion 85 of the case hole 83.

An annular flow passage 89 is provided between the proximal portion (the right end portion) of the small-diameter shaft portion 88 of the case 84 and the large-diameter hole portion 85 of the case hole 83. Further, an annular flow passage 90 is provided between the small-diameter shaft portion 88 of the case 84 and the small-diameter hole portion 86 of the case hole 83. The annular flow passage 90 is formed by an annular groove formed on the small-diameter hole portion 86. The annular flow passage 90 is sealed by a seal ring 91 and a seal ring 92 provided on the small-diameter shaft portion 88 of the case 84. On the other hand, the annular flow passage 89 is sealed by the seal ring 92 and a seal ring 93. The seal ring 93 is compressed between the case hole 83 and the case 84. The case 84 is fixed to the housing 13 using a nut 96.

A valve rod 97 is provided in a hollow portion of the case 84. The valve rod 97 is coaxial with the case hole 83 and the case 84. An axially (horizontally) intermediate portion of the valve rod 97 is slidably fitted in a first hole portion 98 of the case 84. A recessed portion 100 is provided on the end surface of the case 84 on the inner side (the "left side" in Fig. 2). The end of the first hole portion 98 on the inner side is opened to the bottom portion of the recessed portion 100. A washer 101 and a nut 102 are mounted in the recessed portion 100. The first hole portion 98 of the case 84 is sealed to the oil chamber 16 by a seal ring 103 provided in an annular groove of the bottom surface of the recessed portion 100.

The valve rod 97 is inserted through the washer 101 and the nut 102, and an end portion 99 (the distal end) thereof on the inner side (the "left side" in Fig. 2) protrudes from the end surface (one end side) of the case 84 on the inner side to the oil chamber 16. The spherical surface of the end portion 99 on the inner side is in abutment with the actuation arm 14 and the valve rod 97 axially moves in conjunction with the pivotal movement of the actuation arm 14. A second hole portion 104 is provided in the hollow portion of the case 84. The end of the first hole portion 98 on the outer side (the "right side" in Fig. 2) is opened to the bottom portion of the second hole portion 104. The second hole portion 104 is in communication with the annular passage 90 via a plurality of passages 105 ("two passages" illustrated in Fig. 2) provided on the small-diameter shaft portion 88 of the case 84.

A third hole portion 106 is provided in the hollow portion of the case 84. The end of the second hole portion 104 on the outer side (the "right side" in Fig. 2) is opened to the third hole portion 106. The third hole portion 106 is in communication with the annular flow passage 89 via a plurality of passages 107 ("two passages" illustrated in Fig. 2) provided on the small-diameter shaft portion 88 of the case 84. The hole diameter of the hollow portion of the case 84 increases in the order of the first hole portion 98, the second hole portion 104, and the third hole portion 106.

A stepped recessed portion 108 is provided on the end surface of the case 84 on the outer side (the "right side" in Fig. 2). The end of the third hole portion 106 on the outer side is opened to the bottom portion of the stepped recessed portion 108. An exhaust-side port portion 109 is mounted in the stepped recessed portion 108. The third hole portion 106 is sealed to the atmosphere by a seal ring 110 provided on the exhaust-side port portion 109. The exhaust-side port portion 109 is prevented from being detached off from the case 84 by a stop ring 111 attached on the step portion of the stepped recessed portion 108. One end side of a passage 4B (refer to Fig. 1) is connected to the air spring 3 (the fluid actuation apparatus), and the opposite end side of the passage 4B is connected to the exhaust-side port portion 109. Further, the exhaust-side port portion 109 is in communication with the atmosphere via a passage (not illustrated) provided to the housing 13.

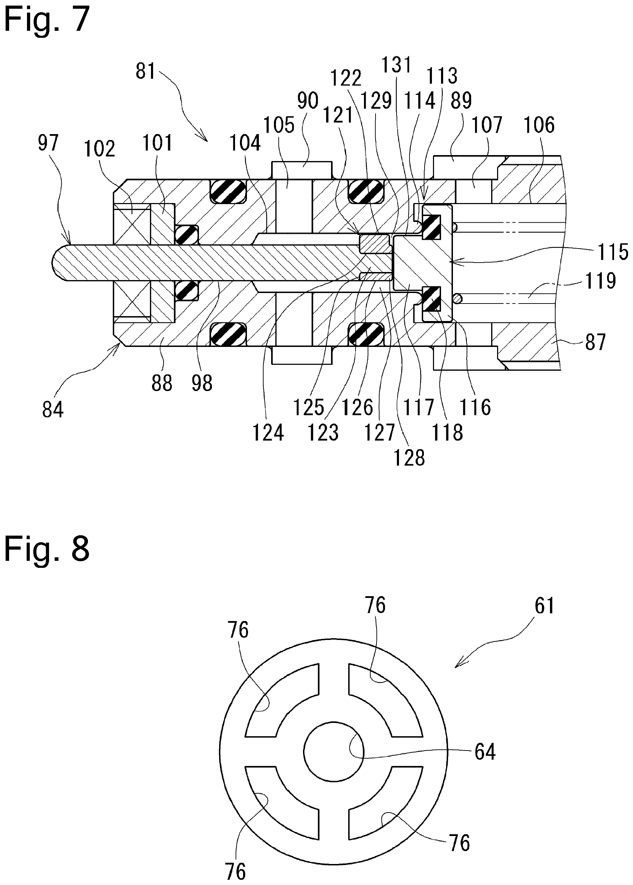

Referring to Figs. 2 and 7, a valve portion 113 is provided in the exhaust valve 81. The valve portion 113 establishes or blocks communication between the air spring 3 (the fluid actuation apparatus) and the atmosphere according to a movement of the valve rod 97. The valve portion 113 includes an annular seat portion 114 and a valve body 115. The seat portion 114 is provided on the circumferential edge of the opening of the second hole portion 104 on the outer side (the "right side" in Fig. 2). The valve body 115 is in abutment with the seat portion 114 separably therefrom. The seat portion 114 has a protrusion shape protruding to the outer side with respect to the bottom surface of the third hole portion 106.

The valve body 115 is a component separated off from the valve rod 97, and is formed into a stepped columnar shape including a large-diameter portion 116 and a small-diameter portion 117. The large-diameter portion 116 and the small-diameter portion 117 of the valve body 115 are inserted in the third hole portion 106 of the case 84 and the second hole portion 104 of the case 84, respectively. An annular seated portion 118 is embedded between the large-diameter portion 116 and the small-diameter portion 117. The seated portion 118 faces the seat portion 114. The valve body 115 is biased in a valve-closing direction (the "leftward direction in Fig. 2) by a valve spring 119 provided between the valve body 115 and the exhaust-side port portion 109. For example, an elastic member is used as the seated portion 118. Further, an annular extremely small flow passage 131 is formed between the small-diameter portion 117 and the second hole portion 104 with the small-diameter portion 117 of the valve body 115 inserted in the second hole portion 104.

The exhaust valve 81 includes a guide portion 121 provided at the end portion (the proximal end) of the valve rod 97 on the outer side (the "right side" in Fig. 2). The guide portion 121 is formed into a sleeve-like shape, and an outer peripheral surface 122 thereof is guided by the second hole portion 104 of the case 84 in the axial direction (the "horizontal direction" in Fig. 7). In other words, the guide portion 121 is inserted in the second hole portion 104 of the case 84. A shaft hole 124 is formed through the guide portion 121. A small-diameter shaft portion 123 formed at the end portion of the valve rod 97 on the outer side is press-fitted in the shaft hole 124. The guide portion 121 is axially positioned relative to the valve rod 97 due to abutment of the end surface thereof on the inner side (the "left side" in Fig. 7) against a stepped portion 125 of the valve rod 97.

A plurality of ("three" in the first embodiment) grooves 126 (refer to Fig. 7) is provided on the outer peripheral surface 122 of the guide portion 121. The grooves 126 are arranged at circumferential equal intervals. The grooves 126 extend on the guide portion 121 in the axial direction (the "horizontal direction" in Fig. 3). Due to that, a plurality of flow passages 127 is formed between the case 84 and the guide portion 121. The flow passages 127 establish communication between the annular flow passage 89 and the annular flow passage 90. A boss portion 128 coaxial with the guide portion 121 is formed on the end surface of the guide portion 121 on the outer side (the "right side" in Fig. 7). The end surface of the boss portion 128 is in abutment with the end surface of the small-diameter portion 117 of the valve body 115. Due to that, an annular flow passage 129 is formed around the outer periphery of the boss portion 128. The flow passage 129 is in communication with the flow passage 127.

Next, the operation of the above-described intake valve 21 of the leveling valve 1 will be described. The operation of the exhaust valve 81 is similar to the operation of the intake valve 21, and therefore the detailed description thereof will be omitted herein for the purpose of simplifying the description of the specification.

When the actuation arm 14 is located at the neutral position (refer to Fig. 2), the intake valve 21 is in a valve-closed state illustrated in Fig. 3. At this time, the valve body 55 (the seated portion 58) is seated on the seat portion 54 and the valve portion 53 is closed. As a result, a flow of the air (fluid) between the annular flow passage 29 and the annular flow passage 30 is blocked, and the vehicle height is kept at the reference height. When the actuation arm 14 is located at the neutral position, a space of approximately 1 mm is formed between the actuation arm 14 and the valve rod 37, and a dead zone on the intake side can be adjusted by adjusting this space.

When the actuation arm 14 moves pivotally from the neutral position in the counterclockwise direction, the valve rod 37 is pressed in by the actuation arm 14 in a valve-opening direction (the "leftward direction" in Fig. 2). Fig. 4 illustrates the state of the intake valve 21 when the leveling valve 1 exhibits a flow rate characteristic in an extremely low flow rate zone (hereinafter referred to as a "slightly opened state"). When the intake valve 21 is in the slightly opened state, the valve body 55 is pressed in by the valve rod 37 (the boss portion 68 of the guide portion 61) in the valve-opening direction and the seated portion 58 is separated from the seat portion 54, by which the valve portion 53 is opened.

Due to that, the compressed air introduced from the intake-side port portion 49 (refer to Fig. 2) flows into the annular flow passage 30 by passing through the annular flow passage 29, the plurality of passages 47, the annular flow passage 72 on the outer periphery of the large-diameter portion 56 of the valve body 55, the annular flow passage 73 between the large-diameter portion 56 of the valve body 55 and the bottom surface of the third hole portion 46 in the axial direction (the "horizontal direction" in Fig. 4), the extremely small flow passage 71, the annular flow passage 69 between the small-diameter portion 57 of the valve body 55 and the guide portion 61 in the axial direction, the flow passages 67 extending through the guide portion 61, and the plurality of passages 45. At this time, the air flows through the annular extremely small flow passage 71 (an orifice) between the small-diameter portion 57 of the valve body 55 and the second hole portion 44 of the case 24, and therefore the leveling valve 1 exhibits the flow rate characteristic in the extremely low flow rate zone.

When the actuation arm 14 further moves pivotally in the counterclockwise direction, the valve rod 37 is further pressed in by the actuation arm 14 (refer to Fig. 2) in the valve-opening direction. Fig. 5 illustrates the state of the intake valve 21 when the leveling valve 1 exhibits a flow rate characteristic in a normal flow rate zone (hereinafter referred to as a "full opened state"). When the intake valve 21 is in the full opened state, the exit of the small-diameter portion 57 of the valve body 55 from the second hole portion 44 leads to elimination of the extremely small flow passage 71 (refer to Fig. 4) in the slightly opened state and emergence of an annular flow passage 74 having an unrestricted (non-narrowed) flow passage area between the small-diameter portion 57 of the valve body 55 and the opening of the second hole portion 44. As a result, the compressed air introduced from the intake-side port portion 49 (refer to Fig. 2) flows into the annular flow passage 30 by passing through the annular flow passage 29, the plurality of passages 47, the annular flow passage 73, the annular flow passage 74, the flow passages 67, and the plurality of passages 45.

Now, the valve rod and the flow rate control portion are integrally configured in the conventional LV-7 leveling valves, and therefore the flow passage area may increase and the extremely low flow rate characteristic may change if the flow rate control portion is unevenly worn due to a force in a gouging direction that is applied to the valve rod.

On the other hand, in the first embodiment, the valve body 55 (the first flow rate control portion) is configured separately from the valve rod 37, and the extremely small flow passage 71, which controls the flow rate in the flow passage establishing the communication between the compressor 2 (the fluid source) and the air spring 3 (the fluid actuation apparatus), is formed by inserting the small-diameter portion 57 of the valve body 55 in the second hole portion 44 of the case 24. Further, in the first embodiment, the leveling valve 1 is configured in such a manner that the valve rod 37 is guided in the axial direction (the movement direction) by placing the guide portion 61 provided on the valve portion 53 side (the proximal end side) of the valve rod 37 into sliding contact with the case 24.

According to the first embodiment, the valve body 55 (the first flow rate control portion) is not subjected to a force in the gouging direction that is applied to the valve rod 37, and therefore the extremely low flow rate characteristic of the leveling valve 1 (a leveling apparatus) does not change even when the guide portion 61 is unevenly worn by receiving the force on the valve rod 37 in the gouging direction. As a result, the change in the extremely low flow rate characteristic of the leveling valve 1 can be prevented over a long period of time.

The first embodiment can be configured in the following manner.

In the first embodiment, the flow passage area of the annular flow passage 72 should have a large area compared to the flow passage area of the extremely small flow passage 71 to set the extremely low flow rate zone for the extremely low flow rate characteristic (the orifice characteristic) around the neutral position of the actuation arm 14. Therefore, in the first embodiment, a large space (the annular flow passage 72) is generated between the large-diameter portion 56 and the third hole portion 46 compared to the space (the extremely small flow passage 71) between the small-diameter portion 57 and the second hole portion 44, and the valve body 55 may be tilted with respect to the axis of the case 24 as a result thereof. In light thereof, the leveling valve 1 can be configured in such a manner that the space between the large-diameter portion 56 and the third hole portion 46 is narrowed to a smaller size than the space between the small-diameter portion 57 and the second hole portion 44, and, further, a flow passage establishing the communication between the plurality of passages 47 and the annular flow passage 73 is formed by providing a plurality of grooves (for example, refer to the "grooves 66" in Fig. 6) around the large-diameter portion 56.

Further, as illustrated in Fig. 8, the flow passages 67 axially extending through the guide portion 61 can be formed by providing a plurality of holes 76 axially extending through the guide portion 61 around the shaft hole 64 of the guide portion 61.

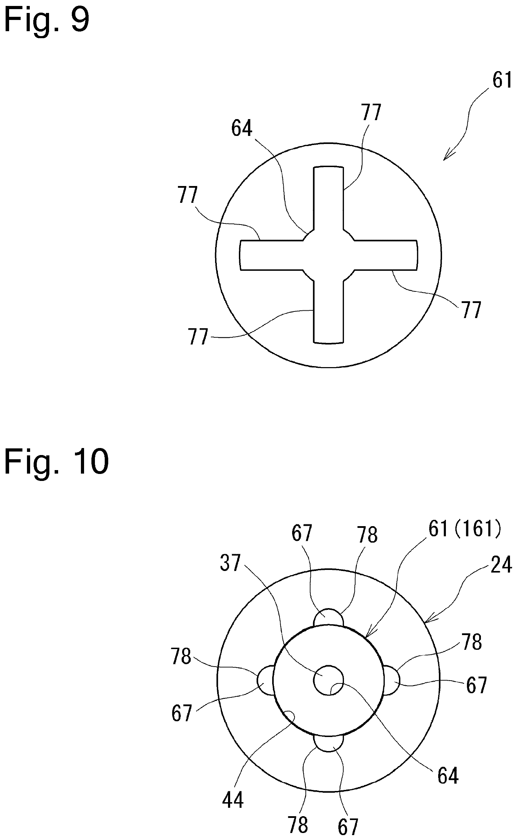

Alternatively, as illustrated in Fig. 9, the flow passages 67 axially extending through the guide portion 61 can be formed by providing a plurality of cutouts 77 radially extending from the shaft hole 64 of the guide portion 61.

Alternatively, as illustrated in Fig. 10, the flow passages 67 axially extending through the guide portion 61 can be formed by providing axially extending grooves 78 on the inner peripheral surface of the second hole portion 44 of the case 24.

(Second Embodiment) A second embodiment of the present invention will be described with reference to the accompanying drawings.

The same or equivalent components as or to the first embodiment will be identified by the same names and reference numerals, and the detailed descriptions thereof will be omitted below.

In the above-described first embodiment, as illustrated in Fig. 4, the valve body 55 (the first flow rate control portion) is configured separately from the valve rod 37, and the extremely small flow passage 71, which controls the flow rate in the flow passage establishing the communication between the compressor 2 (the fluid source) and the air spring 3 (the fluid actuation apparatus), is formed between the valve body 55 and the case 24 by inserting the small-diameter portion 57 of the valve body 55 in the second hole portion 44 of the case 24.

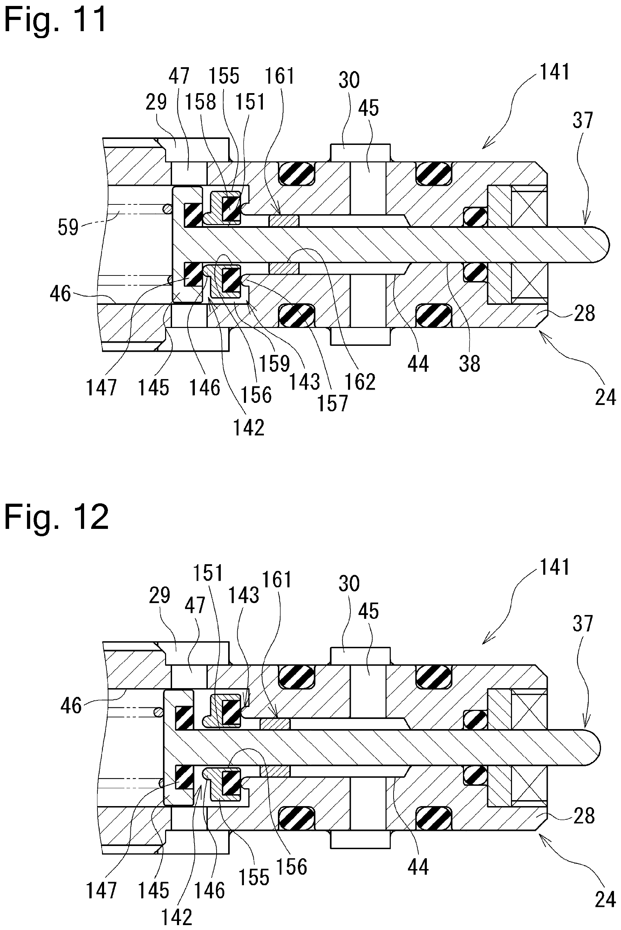

On the other hand, in the second embodiment, as illustrated in Fig. 11, the valve rod 37 and a valve body 145 (the first flow rate control portion) of a first valve portion 142 are integrally configured, and an extremely small flow passage 151, which controls the flow rate of the flow passage establishing the communication between the compressor 2 and the air spring 3, is formed between a valve body 155 and the valve rod 37 by inserting the valve rod 37 in a shaft hole 156 (a radially inner portion) of the valve body 155 (a second flow rate control portion) of a second valve portion 143.

The first valve portion 142 includes an annular seat portion 146 and the valve body 145 (the first flow rate control portion). The seat portion 146 is provided on the circumferential edge of the opening of the valve body 155 of the second valve portion 143 on the outer side of the shaft hole 156 (the "left side" in Fig. 11). The valve body 145 is in abutment with the seat portion 146 separably. The valve body 145 is provided at the proximal end portion (the "left-side end portion" in Fig. 11) of the valve rod 37, and is inserted in the third hole portion 46 of the case 24. An annular seated portion 147 is embedded in the end surface of the valve body 145 on the inner side (the "right side" in Fig. 11). The seated portion 147 faces the seat portion 146. The valve body 145 and thus the valve rod 37 are biased by the valve spring 59 provided between the intake-side port portion 49 (refer to Fig. 2) and the valve body 145 in a valve-closing direction (the "rightward direction" in Fig. 11).

On the other hand, the second valve portion 143 includes an annular seat portion 157 and the valve body 155 (the second flow rate control portion). The seat portion 157 is provided on the circumferential edge of the opening of the second hole portion 44 of the case 24. The valve body 155 is in abutment with the seat portion 157 separably. The valve body 155 is cylindrically formed, and is inserted in the third hole portion 46 of the case 24. The valve body 155 is disposed axially between the valve body 145 of the first valve portion 142 and the bottom surface of the third hole portion 46, and an annular seated portion 158 is embedded in the end surface of the valve body 155 on the inner side (the "right side" in Fig. 11) that faces the seat portion 157. The valve body 155 of the second valve portion 143 has a smaller outer diameter than the valve body 145 of the first valve portion 142, and an annular flow passage 159 is provided around the outer periphery of the valve body 155.

A cylindrical guide portion 161 is inserted in the second hole portion 44 of the case 24. The valve rod 37 is fixed in a shaft hole 162 of the guide portion 161 by, for example, being press-fitted therein. In the second embodiment, the flow passages 67 (refer to Fig. 10) axially extending through the guide portion 161 are formed by providing the axially extending grooves 78 (refer to Fig. 10) on the inner peripheral surface of the second hole portion 44 of the case 24.

The exhaust valve according to the second embodiment has a similar basic structure to the intake valve 141. Therefore, the detailed description of the exhaust valve will be omitted here for the purpose of simplifying the description of the specification.

In the second embodiment, when the actuation arm 14 is located at the neutral position (refer to Fig. 2), the intake valve 141 is in the valve-closed state illustrated in Fig. 11. At this time, the valve body 145 (the seated portion 147) is seated on the seat portion 146, by which the first valve portion 142 is closed. On the other hand, the valve body 155 (the seated portion 158) is seated on the seat portion 157, by which the second valve portion 143 is closed. As a result, the flow of the air (fluid) between the annular flow passage 29 and the annular flow passage 30 is blocked, and the vehicle height is kept at the reference height. When the actuation arm 14 is located at the neutral position, a space of approximately 1 mm is formed between the actuation arm 14 and the valve rod 37, and a dead zone on the intake side can be adjusted by adjusting this space.

When the actuation arm 14 moves pivotally from the neutral position in the counterclockwise direction, the valve rod 37 is pressed in by the actuation arm 14 in a valve-opening direction (the "leftward direction" in Fig. 11). Fig. 12 illustrates the slightly opened state of the intake valve 141 when the leveling valve 1 exhibits the extremely low flow rate characteristic. When the intake valve 141 is in the slightly opened state, the valve body 145 (the first flow rate control portion) integrated with the valve rod 37 moves in the valve-opening direction and the seated portion 147 is separated from the seat portion 146, by which the first valve portion 142 is opened.

As a result, the compressed air introduced from the intake-side port portion 49 (refer to Fig. 2) flows into the annular flow passage 30 by passing through the annular flow passage 29, the plurality of passages 47, the extremely small flow passage 151, the flow passages 67 (refer to Fig. 10) extending through the guide portion 161, and the plurality of passages 45. At this time, the air flows through the annular extremely small flow passage 151 (an orifice) between the shaft hole 156 of the valve body 155 and the valve rod 37, and therefore the leveling valve 1 exhibits the extremely low flow rate characteristic. The valve body 155 is subjected to a force due to the compressed air in the valve-closing direction (the "rightward direction" in Fig. 12), and therefore the second valve portion 143 is kept closed.

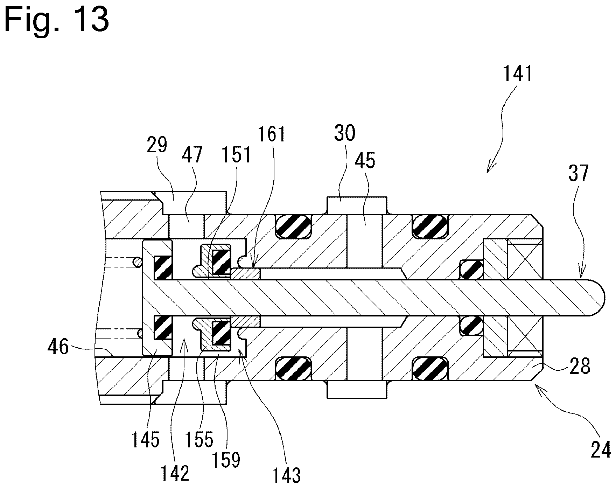

When the actuation arm 14 further moves pivotally in the counterclockwise direction, the valve rod 37 is further pressed in by the actuation arm 14 in the valve-opening direction. Fig. 13 illustrates the full opened state of the intake valve 141. When the intake valve 141 is in the full opened state, the valve body 155 of the second valve portion 143 is pressed in by the guide portion 161 in the valve-opening direction, and is located at a valve-opening position. At the valve-opening position of the valve body 155, the compressed air introduced from the intake-side port portion 49 (refer to Fig. 2) flows into the annular flow passage 30 by passing through the annular flow passage 29, the plurality of passages 47, the annular flow passage 159 around the outer periphery of the valve body 155, the flow passages 67 (refer to Fig. 10), and the plurality of passages 45. Because the extremely small flow passage 151 is not eliminated even with the intake valve 141 in the full opened state, precisely speaking, the leveling valve 1 exhibits a flow rate characteristic combined with the extremely low flow rate characteristic.

The second embodiment can bring about functions and advantageous effects similar to the above-described first embodiment.

The second embodiment can be configured in the following manner.

In the second embodiment, a larger space should be generated between the valve body 155 and the third hole portion 46 than the space between the valve body 155 and the valve rod 37 (the extremely small flow passage 151) to secure the flow passage area of the annular flow passage 159 with the intake valve 141 in the full opened state (refer to Fig. 13), and therefore the valve body 155 may be tilted with respect to the axis of the case 24 as a result thereof. In light thereof, the leveling valve 1 can be configured in such a manner that the space between the valve body 155 and the third hole portion 46 is narrowed to a smaller size than the space between the valve body 155 and the valve rod 37, and, further, a flow passage establishing the communication between the pluralities of passages 47 and flow passages 45 is formed by providing a plurality of grooves (for example, refer to the "grooves 66" in Fig. 6) around the valve body 155.

The present invention shall not be limited to the above-described embodiments, and includes various modifications. For example, the above-described embodiments have been described in detail to facilitate a better understanding of the present invention, and the present invention shall not necessarily be limited to the configuration including all of the described features. Further, a part of the configuration of some embodiment can be replaced with the configuration of another embodiment. Further, some embodiment can also be implemented with a configuration of another embodiment added to the configuration of this embodiment. Further, each embodiment can also be implemented with another configuration added, deleted, or replaced with respect to a part of the configuration of this embodiment.

The present application claims priority under the Paris Convention to Japanese Patent Application No. 2020-004427 filed on January 15, 2020. The entire disclosure of Japanese Patent Application No. 2020-004427 filed on January 15, 2020 including the specification, the claims, the drawings, and the abstract is incorporated herein by reference in its entirety.

### REFERENCE SIGNS LIST

- 1: leveling valve (leveling apparatus)
- 2: compressor (fluid source)
- 3: air spring (fluid actuation apparatus)
- 4: passage
- 5: bogie
- 6: vehicle body
- 14: actuation arm
- 24: case
- 37: valve rod
- 53: valve portion
- 55: valve body (first flow rate control portion)
- 61: guide portion

## Claims

1. A leveling apparatus provided in a passage of fluid between a fluid source and a fluid actuation apparatus and configured to adjust a height of a vehicle body relative to a bogie, the leveling apparatus comprising:
an actuation arm configured to move pivotally according to a relative displacement of the vehicle body to the bogie;
a case including a flow passage establishing communication between the fluid source or the atmosphere and the fluid actuation apparatus;
a valve rod having a distal end protruding from one end side of the case into abutment with the actuation arm and configured to move relative to the case according to the pivotal movement of the actuation arm;
a valve portion contained in the case and configured to open the flow passage due to the movement of the valve rod;
a first flow rate control portion provided between the valve portion and the valve rod and configured to control a flow rate in the flow passage according to a movement position of the valve rod; and
a guide portion provided to the valve rod, the guide portion being disposed at a position different from the first flow rate control portion in a movement direction of the valve rod and placed in sliding contact with an inside of the case.

2. The leveling apparatus according to claim 1, further comprising a second flow rate control portion provided between the valve portion and the case, the valve rod being inserted in a radially inner portion of the second flow rate control portion.
